# EUROPEAN PATENT SPECIFICATION

(11) **EP 3 947 132 B1**
(45) Date of publication and mention of the grant of the patent: **15.07.2026**
(21) Application number: 19715044.4
(22) Date of filing: 28.03.2019
(51) Int. Cl.: B63B 1/38

(54) **AIR SUPPLY APPARATUS FOR A SHIP, SHIP INCLUDING THE SAME, AND METHOD FOF SUPPLYING AIR TO AN AIR LUBRICATION DEVICE**
LUFTZUFÜHRVORRICHTUNG FÜR EIN SCHIFF, SCHIFF DAMIT UND VERFAHREN ZUM ZUFÜHREN VON LUFT ZU EINER LUFTSCHMIERVORRICHTUNG
APPAREIL D'ALIMENTATION EN AIR POUR UN NAVIRE, NAVIRE LE COMPRENANT, ET PROCÉDÉ POUR FOURNIR DE L'AIR À UN DISPOSITIF DE LUBRIFICATION À AIR

(43) Date of publication of application: 09.02.2022
(73) Proprietor: Accelleron Switzerland Ltd., 5400 Baden (CH)
(72) Inventor: KEINAENEN, Jari, 5430 Wettingen (CH)
(74) Representative: Zimmermann & Partner Patentanwälte mbB
(86) International application number: PCT/EP2019/057926
(87) International publication number: WO 2020/192932

(56) References cited:
- WO-A1-2014/058008
- DE-A1- 102009 022 711
- KR-A- 20140 047 768
- US-A1- 2007 079 612

## Description

### TECHNICAL FIELD

Embodiments of the present disclosure relate to an air supply apparatus of an air lubrication type ship for reducing water friction resistance. Further, embodiments of the present disclosure relate to a method of supplying air to an air lubrication device of a ship.

### BACKGROUND

Generally, a ship receives friction resistance of water during marine navigation on its submerged surface of the ship's bottom. Especially for large ships, e.g. cargo ships, a large portion of the ship's hull resistance of results from friction resistance generated by relative flow of outside water at the ship's bottom.

To reduce ship's hull friction resistance air lubrication can be used, particularly by discharging air into surroundings of the ship's hull. The reduction of friction resistance has a large fuel economy improving effect, and thus represent effective means to reduce the CO₂ emission of the ship.

In the state of the art, there are various systems and approaches for the production of air bubbles for the hull lubrication. For instance, for the generation of air bubbles for hull lubrication, the prior art teaches direct usage of exhaust gas of the driving engine or to use separate electrical compressors or blowers. However, the known systems for hull lubrication have some disadvantages, particularly in terms of energy consumption.

With respect to the state of the art, reference is made to documents KR 2014 0047768 A, US 2007/079612 A1, DE 10 2009 022711 A1, and WO 2014/058008 A1.

KR 2014 0047768 A relates to an air lubrication system for a ship comprising: an engine on a ship with an air outlet; a turbine to which an exhaust gas from the operation of the engine is supplied; a first compressor which generates first compressed air by compressing the first air with the operation of the turbine and to supply the first compressed air to the engine; and a second compressor which generates second compressed air by compressing the second air with the flow of the exhaust gas to supply the second compressed air to be emitted to the surface of the ship in touch with the water through the air outlet.

US 2007/079612 A1 relates to a regulated two-stage turbocharger system, including high-pressure and low-pressure turbocharger units. The low-pressure turbocharger unit includes a twin volute turbine portion. The turbocharger system includes a valve system having valve members that are independently controllable so as to selectively control an exhaust gas flow into the twin volutes of the turbine portion of the low-pressure turbocharger unit. By-pass valve systems are also provided for the twin volute turbine portion of the low-pressure turbocharger unit and the compressor portion of the high-pressure turbocharger unit.

DE 10 2009 022711 A1 relates to a marine-vessel propulsion system and a marine-vessel equipped with the same, wherein the marine-vessel propulsion system includes an internal combustion engine, a compressed gas providing mechanism for providing the compressed gas, and a gas blanket generation device which is connected with the compressed gas providing mechanism so as to convey the compressed gas provided by the compressed gas providing mechanism to the gas blanket generation device, the gas blanket generation device is used for generating a gas blanket on the bottom of the marine-vessel by means of the compressed gas, wherein the compressed gas providing mechanism is connected with the internal combustion engine, and the compressed gas providing mechanism is used for improving the pressure of the gas by means of energy of exhaust gas generated by the internal combustion engine so as to generate the compressed gas.

WO 2014/058008 A1 relates to a hull resistance reduction system with a main engine, an exhaust turbine compression mechanism actuated by some of the exhaust gas led from the main engine, and a discharge nozzle for leading compressed air led from the exhaust turbine compression mechanism to a submerged hull outer surface of the ship. The hull resistance reduction system is characterized in that the exhaust turbine compression mechanism is provided with an exhaust turbine rotatably driven by the led exhaust gas, a compressor that uses the rotational drive force of the exhaust turbine to compress air, and an electric power generator that generates power by means of the exhaust turbine and heats the compressor.

Accordingly, in view of the above, there is a demand for improved air supply apparatuses for ships as wells as for improved methods of supplying air to an air lubrication device of ships which at least partially overcome the problems of the state of the art, particularly with respect to energy consumption.

### SUMMARY

In light of the above, an air supply apparatus for a ship and a method of supplying air to an air lubrication device of a ship according to the independent claims are provided. Further aspects, advantages, and features are apparent from the dependent claims, the description, and the accompanying drawings.

According to an aspect of the present disclosure, an air supply apparatus for a ship is provided. The air supply apparatus includes a main turbocharger having a main compressor and a main turbine. The main turbine is drivable by exhaust gas of a main engine. Additionally, the air supply apparatus includes an auxiliary turbocharger having an auxiliary compressor and an auxiliary turbine. The auxiliary turbine is drivable by exhaust gas provided from the main turbine. Further, the air supply apparatus includes an air lubrication device for resistance reduction of the ship. The auxiliary compressor is connected with the air lubrication device for supplying air to the air lubrication device.

Accordingly, the air supply apparatus of the present disclosure is improved compared to conventional apparatuses used for air lubrication type ships. In particular, embodiments of the air supply apparatus as described herein are improved with respect to energy efficiency. More specifically, by providing an air supply apparatus with an auxiliary turbocharger downstream of the main turbocharger according to embodiments described herein has the advantage that masses of low pressure compressed air for the air lubrication device can be produced with high energy efficiency. Accordingly, more generally speaking, a turbo charged marine engine can be equipped with an auxiliary turbocharger such that beneficially the energy tied to the exhaust gas after expansion in the engine's main turbo chargers can be used for driving the auxiliary turbocharger. The auxiliary turbocharger is employed to compress low pressure air in a great volume which subsequently is fed to an air lubrication device for air bubble generation under the vessel's hull to reduce water-hull friction of a ship. Less friction for the vessel's hull results in an overall reduction of energy usage of the ship.

Further, it is to be noted that conventionally, the exhaust gas from the main turbocharger is wasted trough an exhaust pipe. Thus, by using the exhaust gas from the main turbocharger to drive the auxiliary turbocharger used for providing air to the air lubrication device, the vessels fuel efficiency can significantly be improved. In other words, embodiments of the present disclosure beneficially provide for the possibility to increase the overall energy efficiency of ships resulting in savings of fuel thereby reducing operation costs.

According to a further aspect of the present disclosure, a ship including an air supply apparatus according to any embodiments described herein is provided.

According to another aspect of the present disclosure, a method of supplying air to an air lubrication device of a ship is provided. The method includes driving an auxiliary turbocharger by using exhaust gas from a main turbine of a main turbocharger. The auxiliary turbocharger has an auxiliary compressor and an auxiliary turbine. The main turbocharger has a compressor and the main turbine. The main turbine is drivable by exhaust gas of a main engine. The main turbocharger is used for charging the main engine for driving the ship. Further, the method includes supplying air from the auxiliary compressor of the auxiliary turbocharger to the air lubrication device for resistance reduction of the ship. The auxiliary compressor is connected with the air lubrication device.

Accordingly, it is to be understood that embodiments of the present disclosure provide for an air supply apparatus, a ship including the air supply apparatus, and a method of supplying air to an air lubrication device of the ship, which are improved with respect to energy efficiency such that operation costs can be reduced. In particular, by employing the embodiments as described herein, the energy efficiency may be improved by 5% to 10% or even more.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic view of an air supply apparatus according to embodiments described herein;
- Fig. 2: shows a schematic view an air supply apparatus according to further embodiments described herein; and
- Fig. 3: shows a flowchart for illustrating a method of supplying air to an air lubrication device of a ship according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

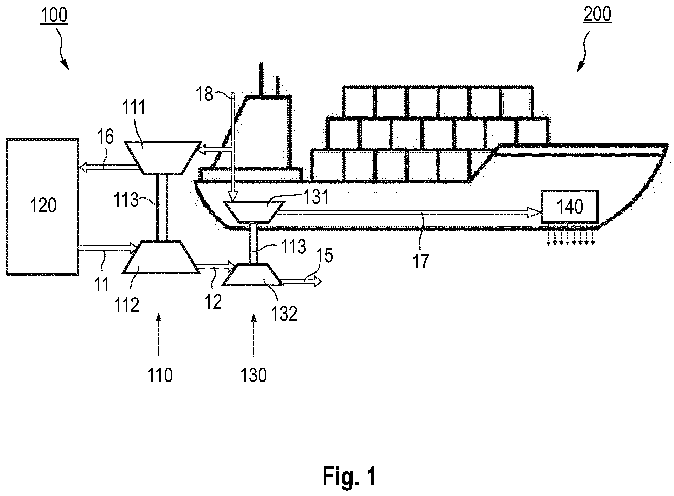

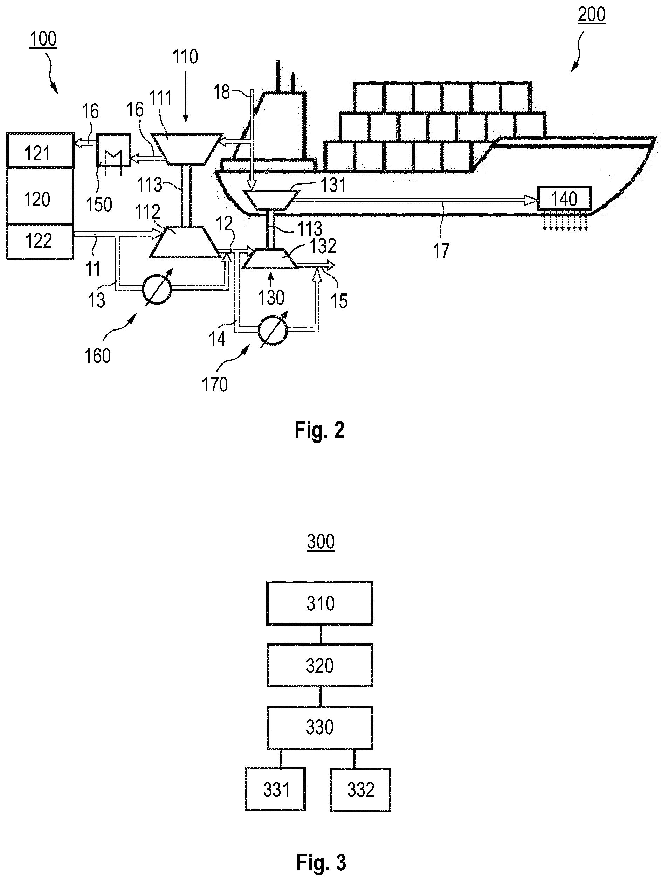

With exemplary reference to Figs. 1 and 2, an air supply apparatus 100 according to the present disclosure is described. The air supply apparatus 100 includes a main turbocharger 110 having a main compressor 111 and a main turbine 112. Typically, the main compressor 111 is connected with the main engine 120 via a first air supply pipe 16. The main turbine 112 is typically connected with the main engine 120 via a first exhaust gas pipe 11. The main turbine 112 is drivable by exhaust gas of a main engine 120.

More specifically, as exemplarily shown in Fig. 2, the main compressor 111 can be connected with an air receiver 121 of the main engine 120 via the first air supply pipe 16. In particular, the first air supply pipe 16 may include a charge air cooler 150, as schematically indicated in Fig. 2.

Additionally, as exemplarily shown in Figs. 1 and 2, the air supply apparatus 100 includes an auxiliary turbocharger 130 having an auxiliary compressor 131 and an auxiliary turbine 132. The auxiliary turbine 132 is drivable by exhaust gas provided from the main turbine 112. In particular, typically the auxiliary turbine 132 is connected with the main turbine 112 via a second exhaust gas pipe 12. As exemplarily shown in Figs. 1 and 2, typically an air intake 18 is provided for providing air to the main compressor 111 as well as to the auxiliary compressor 131. Further, an exhaust gas outlet piping 15 may be provided. In particular, the exhaust gas outlet piping 15 can be connected to the auxiliary turbine 132.

Further, as schematically shown in Figs. 1 and 2, the air supply apparatus 100 includes an air lubrication device 140 for resistance reduction of the ship. The auxiliary compressor 131 is connected with the air lubrication device 140, particularly via a second air supply pipe 17, for supplying air to the air lubrication device 140. In particular, the air lubrication device 140 is configured for air bubble generation for hull lubrication. More specifically, typically the air lubrication device is configured for generating or forming an air layer on a bottom surface of the hull by discharging air to an outer surface below a waterline of the hull. Thereby, beneficially frictional resistance between the ship and water can be reduced.

Accordingly, embodiments of the air supply apparatus as described herein, beneficially provide for improved energy efficiency compared to conventional apparatuses used for air lubrication type ships. In particular, by providing an air supply apparatus with an auxiliary turbocharger downstream of the main turbocharger has the advantage that masses of low pressure compressed air for the air lubrication device can be produced with high energy efficiency. Further, the air supply apparatus according to embodiments described herein has the advantage to be self-adjusting. More specifically, the faster the ship is driving, the more pressure is coming from the main turbo charger to the auxiliary turbocharger resulting in increased air supply to the air lubrication device and thus more bubble generation under the vessel's hull to reduce water-hull friction of the ship.

With exemplary reference to Fig. 2, according to embodiments, which can be combined with other embodiments described herein, the main turbine 112 is connected with an exhaust gas receiver 122 of the main engine 20, e.g. via the first exhaust gas pipe 11. In particular, as shown in Fig. 2, the first exhaust gas pipe 11 can be connected to a flow controller 160 for controlling an exhaust gas flow provided from the exhaust gas receiver 122 to the main turbine 112. The flow controller 160 can be provided in a first bypass piping 13 bypassing the main turbine 112. Accordingly, beneficially the amount of exhaust gas provided from the main engine 120 to the main turbine 112 can be controlled. Consequently, the flow controller 160 may be used to control the speed of the main turbine 112 and thus the amount of exhaust gas provided from the main turbine 112 to the auxiliary turbine 132, thereby controlling the speed of the auxiliary turbocharger 130. Thus, by controlling the speed of the auxiliary turbocharger 130, the amount of air provided from the auxiliary compressor 131 to the air lubrication device 140 can be controlled.

Further, as exemplarily shown in Fig. 2, the second exhaust gas pipe 12 can be connected to a bypass valve 170 for controlling an exhaust gas flow provided from the main turbine 112 to the auxiliary turbine 132. More specifically, the bypass valve 170 can be provided in a second bypass piping 14 bypassing the auxiliary turbine 132. Accordingly, beneficially the amount of exhaust gas provided from the main turbine 112 to the auxiliary turbine 132 can be controlled. Consequently, the bypass valve 170 may be used to control the speed of the auxiliary turbocharger 130 and thus the amount of air provided from the auxiliary compressor 131 to the air lubrication device 140.

Accordingly, from Figs. 1 and 2 it is to be understood, that according to another aspect of the present disclosure a ship 200 including an air supply apparatus according to any embodiments described herein is provided. Thus, a ship with a more energy efficient system for water-hull friction reduction can be provided, such that the overall operation costs can be reduced.

With exemplary reference to the flowchart shown in Fig. 3, embodiment of a method 300 of supplying air to an air lubrication device of a ship according to the present disclosure are described. According to embodiments, which can be combined with other embodiments described herein, the method includes driving (represented by block 310 in Fig. 3) an auxiliary turbocharger 130 by using exhaust gas from a main turbine 112 of a main turbocharger 110. The main turbocharger 110 is used for charging a main engine 120 for driving the ship. Further, the method 300 includes supplying (represented by block 320 in Fig. 3) air from an auxiliary compressor 131 of the auxiliary turbocharger 130 to the air lubrication device 140.

According to embodiments, which can be combined with other embodiments described herein, the method 300 further includes controlling (represented by block 330 in Fig. 3) an amount of air provided to the air lubrication device 140 by controlling a rotational speed of the auxiliary turbocharger 130. The rotational speed of the auxiliary turbocharger 130 can be controlled by controlling an exhaust gas flow provided to the main turbine 112, e.g. by using (represented by block 331 in Fig. 3) a flow controller 160. In particular, the flow controller 160 can be provided in a first bypass piping 13 bypassing the main turbine 112, as exemplarily shown in Fig. 2. Additionally or alternatively, the exhaust gas flow provided to the auxiliary turbine 132 may be controlled by using (represented by block 332 in Fig. 3) a bypass valve 170, as exemplarily shown in Fig. 2. The bypass valve 170 can be provided in a second bypass piping 14 bypassing the auxiliary turbine 132.

It is to be understood that according to embodiments, which can be combined with other embodiments described herein, the method 300 of supplying air to an air lubrication device of a ship may be conducted by using the air supply apparatus according to any embodiments described in the present disclosure.

Hence, in view of the above, it is to be understood that compared to the state of the art, the embodiments described herein beneficially provide for improved energy efficiency, particularly by 10% or more, of ships resulting such that fuel can be saved resulting in a reduction of CO2 emission. Thus, by employing embodiments of the present disclosure a reduction of operation costs can be achieved.

Further, it is to be understood that, that according to embodiments which can be combined with other embodiments described herein, a turbo charged marine engine can be equipped with one or more auxiliary turbo chargers, which mainly or partially use the remain exhaust gas pressure after expansion in one or more main turbo chargers for the engine. The one or more auxiliary turbo chargers can be used to compress low pressure air (~1.0 bar) in a great volume. The compressed air can be fed under the vessel's hull as bubbles, which have less sliding friction against the hull than water has, so that the hull's overall sliding friction can be reduced. When the hull lubrication is activated, the hull friction is reduced, the vessel speed is increased while the needed propeller power is reduced. Thereby, faster speeds and better fuel economy for the vessel can be achieved.

While the foregoing is directed to embodiments, other and further embodiments may be devised without departing from the basic scope, and the scope is determined by the claims that follow.

### REFERENCE NUMBERS

- 11: first exhaust gas pipe
- 12: second exhaust gas pipe
- 13: first bypass piping
- 14: second bypass piping
- 15: exhaust gas outlet piping
- 16: first air supply pipe
- 17: second air supply pipe
- 18: air intake
- 100: air supply apparatus
- 110: main turbo charger
- 111: main compressor
- 112: main turbine
- 113: shaft
- 120: main engine
- 121: air receiver
- 122: exhaust gas receiver
- 130: auxiliary turbo charger
- 131: auxiliary compressor
- 132: auxiliary turbine
- 140: air lubrication device
- 150: charge air cooler
- 160: flow controller
- 170: bypass valve
- 200: ship
- 300: method of supplying air to an air lubrication device
- 310, 320330, 331, 332: bocks representing method steps as described in the present disclosure

## Claims

1. An air supply apparatus (100) for a ship, comprising:
- a main turbocharger (110) having a main compressor (111) and a main turbine (112), the main turbine (112) being drivable by exhaust gas of a main engine (120);
- an auxiliary turbocharger (130) having an auxiliary compressor (131) and an auxiliary turbine (132), the auxiliary turbine (132) being drivable by exhaust gas provided from the main turbine (112); and
- an air lubrication device (140) for resistance reduction of the ship; wherein the auxiliary compressor (131) is connected with the air lubrication device (140) for supplying air to the air lubrication device (140).

2. The air supply apparatus (100) of claim 1, the main turbine (112) being connected with an exhaust gas receiver (122) of the main engine (120) via a first exhaust gas pipe (11), the first exhaust gas pipe (11) being connected to a flow controller (160) for controlling an exhaust gas flow provided from the exhaust gas receiver (122) to the main turbine (112).

3. The air supply apparatus (100) of claim 1 or 2, the auxiliary turbine (132) being connected with the main turbine (112) via a second exhaust gas pipe (12), the second exhaust gas pipe (12) being connected to a bypass valve (170) for controlling an exhaust gas flow provided from the main turbine (112) to the auxiliary turbine (132).

4. The air supply apparatus (100) of any of claims 1 to 3, the main compressor (111) being connected with an air receiver (121) of the main engine (120) via a first air supply pipe (16), particularly the first air supply pipe (16) comprising a charge air cooler (150).

5. The air supply apparatus (100) of any of claims 1 to 4, the auxiliary compressor (131) being connected with the air lubrication device (140) via a second air supply pipe (17).

6. The air supply apparatus (100) of any of claims 2 to 5, the flow controller (160) being provided in a first bypass piping (13) bypassing the main turbine (112).

7. The air supply apparatus (100) of any of claims 3 to 6, the bypass valve (170) being provided in a second bypass piping (14) bypassing the auxiliary turbine (132).

8. A ship (200) comprising an air supply apparatus (100) according to any of claims 1 to 7.

9. A method (300) of supplying air to an air lubrication device (140) of a ship, comprising:
- driving (310) an auxiliary turbocharger (130), having an auxiliary compressor (131) and an auxiliary turbine (132), by using exhaust gas from a main turbine (112) of a main turbocharger (110), having a main compressor (111) and the main turbine (112), the main turbine (112) being drivable by exhaust gas of a main engine (120), and the main turbocharger (110) being used for charging the main engine (120) for driving the ship; and
- supplying (320) air from the auxiliary compressor (131) of the auxiliary turbocharger (130) to the air lubrication device (140) for resistance reduction of the ship, the auxiliary compressor (131) being connected with the air lubrication device (140).

10. The method (300) of claim 9, further comprising controlling (330) an amount of air provided to the air lubrication device (140) by controlling a rotational speed of the auxiliary turbocharger (130) by controlling an exhaust gas flow provided to the main turbine (112) by using (331) a flow controller (160), particularly the flow controller (160) being provided in a first bypass piping (13) bypassing the main turbine (112).

11. The method (300) of claim 9 or 10, further comprising controlling (330) an amount of air provided to the air lubrication device (140) by controlling a rotational speed of the auxiliary turbocharger (130) by controlling an exhaust gas flow provided to the auxiliary turbine (132) by using (332) a bypass valve (170), the bypass valve (170) being provided in a second bypass piping (14) bypassing the auxiliary turbine (132).

## Patentansprüche

1. Luftzuführvorrichtung (100) für ein Schiff, die Folgendes umfasst:
- einen Hauptturbolader (110) mit einem Hauptverdichter (111) und einer Hauptturbine (112), wobei die Hauptturbine (112) durch Abgas einer Hauptmaschine (120) antreibbar ist;
- einen Hilfsturbolader (130) mit einem Hilfsverdichter (131) und einer Hilfsturbine (132), wobei die Hilfsturbine (132) durch von der Hauptturbine (112) bereitgestelltes Abgas antreibbar ist; und
- eine Luftschmiervorrichtung (140) zur Verringerung des Widerstands des Schiffes;
wobei der Hilfsverdichter (131) mit der Luftschmiervorrichtung (140) verbunden ist, um der Luftschmiervorrichtung (140) Luft zuzuführen.

2. Luftzuführvorrichtung (100) nach Anspruch 1, wobei die Hauptturbine (112) über eine erste Abgasleitung (11) mit einem Abgasbehälter (122) der Hauptmaschine (120) verbunden ist, wobei die erste Abgasleitung (11) mit einer Strömungssteuerung (160) zum Steuern eines Abgasstroms verbunden ist, der von dem Abgasbehälter (122) zu der Hauptturbine (112) bereitgestellt wird.

3. Luftzuführvorrichtung (100) nach Anspruch 1 oder 2, wobei die Hilfsturbine (132) über eine zweite Abgasleitung (12) mit der Hauptturbine (112) verbunden ist, wobei die zweite Abgasleitung (12) mit einem Bypassventil (170) zum Steuern eines Abgasstroms verbunden ist, der von der Hauptturbine (112) zu der Hilfsturbine (132) bereitgestellt wird.

4. Luftzuführvorrichtung (100) nach einem der Ansprüche 1 bis 3, wobei der Hauptverdichter (111) über eine erste Luftzuführleitung (16) mit einem Luftbehälter (121) der Hauptmaschine (120) verbunden ist, wobei insbesondere die erste Luftzuführleitung (16) einen Ladeluftkühler (150) umfasst.

5. Luftzuführvorrichtung (100) nach einem der Ansprüche 1 bis 4, wobei der Hilfsverdichter (131) über eine zweite Luftzuführleitung (17) mit der Luftschmiervorrichtung (140) verbunden ist.

6. Luftzuführvorrichtung (100) nach einem der Ansprüche 2 bis 5, wobei die Strömungssteuerung (160) in einer ersten Bypassleitung (13) bereitgestellt ist, die die Hauptturbine (112) umgeht.

7. Luftzuführvorrichtung (100) nach einem der Ansprüche 3 bis 6, wobei das Bypassventil (170) in einer zweiten Bypassleitung (14) bereitgestellt ist, die die Hilfsturbine (132) umgeht.

8. Schiff (200), das eine Luftzuführvorrichtung (100) nach einem der Ansprüche 1 bis 7 umfasst.

9. Verfahren (300) zum Zuführen von Luft zu einer Luftschmiervorrichtung (140) eines Schiffes, umfassend:
- Antreiben (310) eines Hilfsturboladers (130), der einen Hilfsverdichter (131) und eine Hilfsturbine (132) aufweist, unter Verwendung von Abgas von einer Hauptturbine (112) eines Hauptturboladers (110), der einen Hauptverdichter (111) und die Hauptturbine (112) aufweist, wobei die Hauptturbine (112) durch Abgas einer Hauptmaschine (120) antreibbar ist und der Hauptturbolader (110) zum Aufladen der Hauptmaschine (120) zum Antreiben des Schiffes verwendet wird; und
- Zuführen (320) von Luft vom Hilfsverdichter (131) des Hilfsturboladers (130) zur Luftschmiervorrichtung (140) zur Verringerung des Widerstands des Schiffes, wobei der Hilfsverdichter (131) mit der Luftschmiervorrichtung (140) verbunden ist.

10. Verfahren (300) nach Anspruch 9, ferner umfassend Steuern (330) einer Luftmenge, die der Luftschmiervorrichtung (140) bereitgestellt wird, durch Steuern einer Drehzahl des Hilfsturboladers (130) durch Steuern eines Abgasstroms, der der Hauptturbine (112) bereitgestellt wird, unter Verwendung (331) einer Strömungssteuerung (160), insbesondere der Strömungssteuerung (160), die in einer ersten Bypassleitung (13) bereitgestellt wird, die die Hauptturbine (112) umgeht.

11. Verfahren (300) nach Anspruch 9 oder 10, ferner umfassend Steuern (330) einer Luftmenge, die der Luftschmiervorrichtung (140) bereitgestellt wird, durch Steuern einer Drehzahl des Hilfsturboladers (130) durch Steuern eines Abgasstroms, der der Hilfsturbine (132) bereitgestellt wird, unter Verwendung (332) eines Bypassventils (170), wobei das Bypassventil (170) in einer zweiten Bypassleitung (14) bereitgestellt wird, die die Hilfsturbine (132) umgeht.

## Revendications

1. Appareil d'alimentation en air (100) pour un navire, comprenant :
- un turbocompresseur principal (110) ayant un compresseur principal (111) et une turbine principale (112), la turbine principale (112) étant propre à être entraînée par des gaz d'échappement d'un moteur principal (120) ;
- un turbocompresseur auxiliaire (130) comportant un compresseur auxiliaire (131) et une turbine auxiliaire (132), la turbine auxiliaire (132) étant propre à être entraînée par des gaz d'échappement fournis par la turbine principale (112) ; et
- un dispositif de lubrification à l'air (140) servant à réduire la résistance du navire ;
dans lequel le compresseur auxiliaire (131) est raccordé au dispositif de lubrification à l'air (140) pour alimenter en air le dispositif de lubrification à l'air (140) .

2. Appareil d'alimentation en air (100) selon la revendication 1, la turbine principale (112) étant raccordée à un dispositif de réception de gaz d'échappement (122) du moteur principal (120) par l'intermédiaire d'un premier conduit à gaz d'échappement (11), le premier conduit à gaz d'échappement (11) étant raccordé à un dispositif de régulation d'écoulement (160) pour réguler un écoulement de gaz d'échappement fourni par le dispositif de réception de gaz d'échappement (122) à la turbine principale (112).

3. Appareil d'alimentation en air (100) selon la revendication 1 ou 2, la turbine auxiliaire (132) étant raccordée à la turbine principale (112) par l'intermédiaire d'un second conduit à gaz d'échappement (12), le second conduit à gaz d'échappement (12) étant raccordé à une vanne de contournement (170) servant à réguler un écoulement de gaz d'échappement fourni par la turbine principale (112) à la turbine auxiliaire (132).

4. Appareil d'alimentation en air (100) selon l'une quelconque des revendications 1 à 3, le compresseur principal (111) étant raccordé à un dispositif de réception d'air (121) du moteur principal (120) par l'intermédiaire d'un premier conduit d'alimentation en air (16), en particulier le premier conduit d'alimentation en air (16) comprenant un dispositif de refroidissement d'air de suralimentation (150).

5. Appareil d'alimentation en air (100) selon l'une quelconque des revendications 1 à 4, le compresseur auxiliaire (131) étant raccordé au dispositif de lubrification à l'air (140) par l'intermédiaire d'un second conduit d'alimentation en air (17).

6. Appareil d'alimentation en air (100) selon l'une quelconque des revendications 2 à 5, le dispositif de régulation d'écoulement (160) étant placé dans une première conduite de contournement (13) contournant la turbine principale (112).

7. Appareil d'alimentation en air (100) selon l'une quelconque des revendications 3 à 6, la vanne de contournement (170) étant placée dans une seconde conduite de contournement (14) contournant la turbine auxiliaire (132).

8. Navire (200) comprenant un appareil d'alimentation en air (100) selon l'une quelconque des revendications 1 à 7.

9. Procédé (300) d'alimentation en air d'un dispositif de lubrification à l'air (140) d'un navire, comprenant :
- entraîner (310) un turbocompresseur auxiliaire (130), comportant un compresseur auxiliaire (131) et une turbine auxiliaire (132), à l'aide de gaz d'échappement d'une turbine principale (112) d'un turbocompresseur principal (110), comportant un compresseur principal (111) et la turbine principale (112), la turbine principale (112) étant propre à être entraînée par des gaz d'échappement d'un moteur principal (120), et le turbocompresseur principal (110) servant à suralimenter le moteur principal (120) pour entraîner le navire ; et
- alimenter (320), avec de l'air provenant du compresseur auxiliaire (131) du turbocompresseur auxiliaire (130), le dispositif de lubrification à l'air (140) servant à réduire la résistance du navire, le compresseur auxiliaire (131) étant raccordé au dispositif de lubrification à l'air (140).

10. Procédé (300) selon la revendication 9, comprenant en outre la régulation (330) d'une quantité d'air fournie au dispositif de lubrification à l'air (140) par la régulation d'une vitesse de rotation du turbocompresseur auxiliaire (130) en régulant un écoulement de gaz d'échappement fourni à la turbine principale (112) par l'utilisation (331) d'un dispositif de régulation d'écoulement (160), en particulier le dispositif de régulation d'écoulement (160) étant placé dans une première conduite de contournement (13) contournant la turbine principale (112).

11. Procédé (300) selon la revendication 9 ou 10, comprenant en outre la régulation (330) d'une quantité d'air fournie au dispositif de lubrification à l'air (140) par la régulation d'une vitesse de rotation du turbocompresseur auxiliaire (130) en régulant un écoulement de gaz d'échappement fourni à la turbine auxiliaire (132) par l'utilisation (332) d'une vanne de contournement (170), la vanne de contournement (170) étant placée dans une seconde conduite de contournement (14) contournant la turbine auxiliaire (132).
